# EUROPÄISCHE PATENTSCHRIFT

(11) **EP 1 532 478 B1**
(45) Veröffentlichungstag und Bekanntmachung des Hinweises auf die Patenterteilung: **10.02.2010**
(21) Anmeldenummer: 03790865.4
(22) Anmeldetag: 06.08.2003
(51) Int. Cl.: G02B 6/46

(54) **SPLEISSKASSETTENMANAGEMENTSYSTEM**
SPLICE CASSETTE MANAGEMENT SYSTEM
SYSTEME DE GESTION DE CASSETTES D'EPISSURAGE

(30) Priorität: 26.08.2002 DE 10239569
(43) Veröffentlichungstag der Anmeldung: 25.05.2005
(73) Patentinhaber: CCS Technology, Inc., Wilmington, DE 19803 (US)
(72) Erfinder: IWANEK, Waldemar, 44369 Dortmund (DE)
(74) Vertreter: Sturm, Christoph
(86) Internationale Anmeldenummer: PCT/EP2003/008689
(87) Internationale Veröffentlichungsnummer: WO 2004/021061

(56) Entgegenhaltungen:
- WO-A-02/19005
- GB-A- 2 254 194
- US-A- 4 824 196
- US-A- 5 093 887
- US-A- 5 129 030
- US-A- 5 946 440

## Beschreibung

Die Erfindung betrifft ein Spleißkassettenmanagementsystem für einen Lichtwellenleiter-Verteilerschrank gemäß dem Oberbegriff des Anspruchs 1.

Beim Aufbau von Lichtwellenleiterkabel-Netzwerken werden Verteilerschränke für die Gewährleistung einer strukturierten Verkabelung benötigt. Spleißkassetten sind Untereinheiten von Verteilerschränken und dienen der strukturierten Aufnahme von miteinander zu verspleißenden Lichtwellenleitern. Überlängen der Lichtwellenleiter, die zur schonenden Handhabung der Lichtwellenleiter erforderlich sind, sind nach dem Stand der Technik in sogenannten Überlängenschubladen abgelegt, die zur Handhabung der Lichtwellenleiter ausziehbar sind. Eine Anforderung, die an Lichtwellenleiter-Verteilerschränke gestellt wird, ist eine maximale Bestückung derselben bei hoher Packungsdichte und gleichzeitiger geringfügiger mechanischer Beanspruchung der Lichtwellenleiter.

Das Dokument GB-2254194-A beschreibt ein Spleisskassettenmanagementsystem mit herausziehbaren Spleisskassettenhaltem und klappbaren Spleisskassetten.

Der heutige Standard für Lichtwellenleiter-Verteilerschränke sind sogenannte 19 Zoll Verteilerschränke mit einer Bautiefe von 600 Millimetern. Soll die Bautiefe des Verteilerschranks verkleinert werden, zum Beispiel auf eine Bautiefe von 300 Millimetern, so treten Probleme mit der strukturierten Verkabelung, insbesondere bei der platzsparenden Anordnung der Spleißkassetten und der gleichzeitigen schonenden Handhabung der Überlängen im Verteilerschrank, auf.

Hiervon ausgehend liegt der vorliegenden Erfindung das Problem zu Grunde, ein neuartiges Spleißkassettenmanagementsystem für einen Lichtwellenleiter-Verteilerschrank zu schaffen, welches auch bei verringerter Bautiefe des Verteilerschranks eine strukturierte Verkabelung bei minimaler mechanischer Beanspruchung der Lichtwellenleiter ermöglicht.

Dieses Problem wird durch ein Spleißkassettenmanagementsystem für einen Lichtwellenleiter-Verteilerschrank mit den Merkmalen des Anspruchs 1 gelöst. Das erfindungsgemäße verfügt über den Vorteil, dass eine sich beim Herausziehen der Trageinrichtung bzw. des Spleißkassettenhalters einstellende Längendifferenz zwischen den Spleißkassetten und einem Befestigungspunkt für die Lichtwellenleiter bzw. Lichtwellenleiterkabelautomatisch ausgeglichen. Die Lichtwellenleiter unterliegen nur einer minimalen mechanischen Beanspruchung.

Vorzugsweise ist der Überlängenspeicher derart mit dem ersten Ende auf der ausziehbaren Trageinrichtung montiert ist, dass beim Ausziehen der Trageinrichtung das erste Ende in einem der Trageinrichtung zugeordneten Langloch hin- und herbewegbar ist. Mit den zweiten Ende ist der Überlängenspeicher derart auf der Bodenwand des Gehäuses montiert, dass beim Ausziehen der Trageinrichtung das zweite Ende in einem der Bodenwand zugeordneten Gelenk drehbar ist. Dies gewährleistet einen einfachen konstruktiven Aufbau des Spleißkassettenmanagementsystems.

Bevorzugte Weiterbildungen der Erfindung ergeben sich aus den Unteransprüchen und der nachfolgenden Beschreibung. Ein Ausführungsbeispiel wird anhand der Zeichnung näher erläutert. In der Zeichnung zeigt:
- Fig. 1:: ein erfindungsgemäßes Spleißkassettenmanagementsystem für einen Lichtwellenleiter-Verteilerschrank in perspektivischer Seitenansicht,
- Fig. 2:: das erfindungsgemäße Spleißkassettenmanagementsystem gemäß Fig. 1 mit demontierten Spleißkassetten in einer perspektivischen Seitenansicht,
- Fig. 3:: das erfindungsgemäße Spleißkassettenmanagementsystem gemäß Fig. 1 mit herausgezogener Schublade sowie hochgeklapptem Spleißkassettenhalter und damit frei sichtbarem Überlängenspeicher in einer perspektivischen Seitenansicht,
- Fig. 4:: die Anordnung gemäß Fig. 1 mit aufgeklapptem Überlängenspeicher in einer perspektivischen Seitenansicht,
- Fig. 5:: ein Detail des erfindungsgemäßen Spleißkassettenmanagementsystems im Bereich eines ersten Endes des Überlängenspeichers in einer perspektivischen Seitenansicht, und
- Fig. 6:: ein Detail des efindungsgemäßen Spleißkassettenmanagementsystems im Bereich eines zweiten Endes des Überlängenspeichers in einer perspektivischen Seitenansicht.

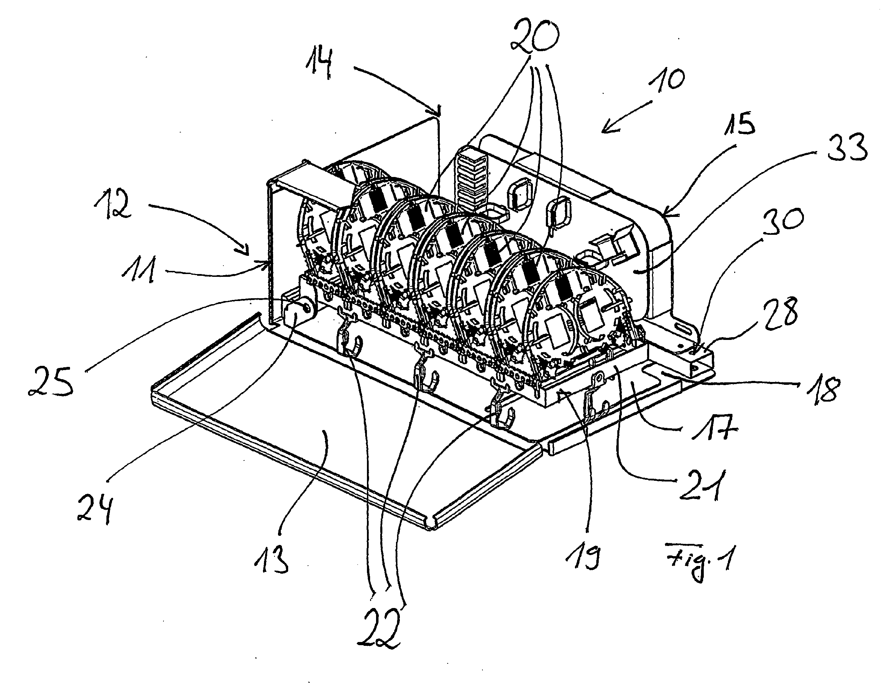

Das erfindungsgemäße Spleißkassettenmanagementsystem 10 gemäß Figuren 1 bis 6 verfügt über ein Gehäuse 11, wobei das Gehäuse 11 an einer Vorderseite 12 desselben von einer Abdeckklappe 13 begrenzt wird. Auf einer der Vorderseite 12 gegenüberliegenden Rückseite 14 des Gehäuses 11 ist im gezeigten Ausführungsbeispiel keine derartige Abdeckklappe vorhanden, sondern vielmehr ein Überlängenspeicher 15. Auf die Anordnung und Ausgestaltung des Überlängenspeichers 15 wird weiter unten noch in größerem Detail eingegangen.

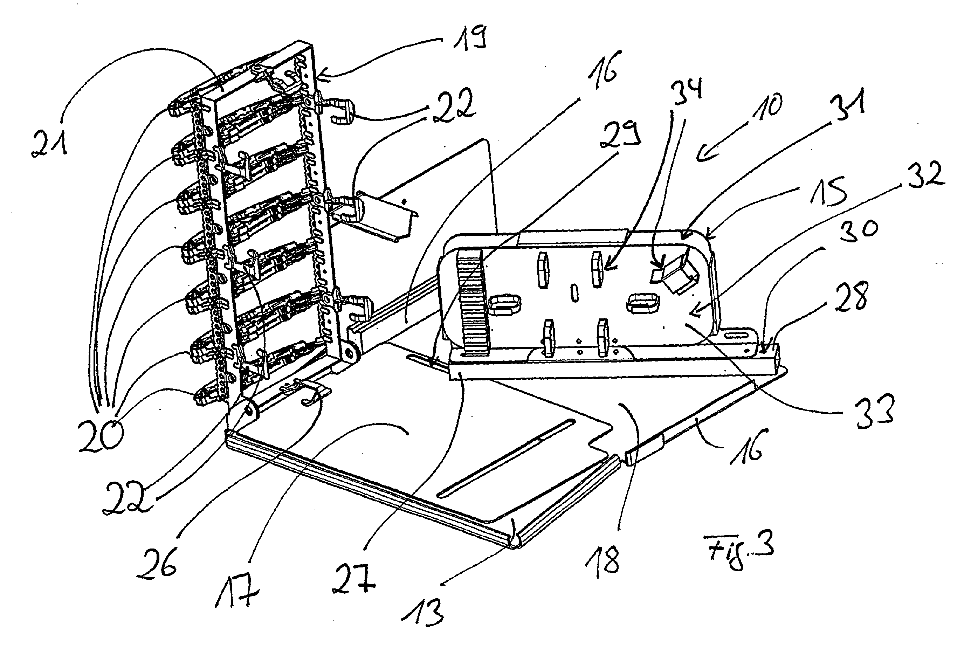

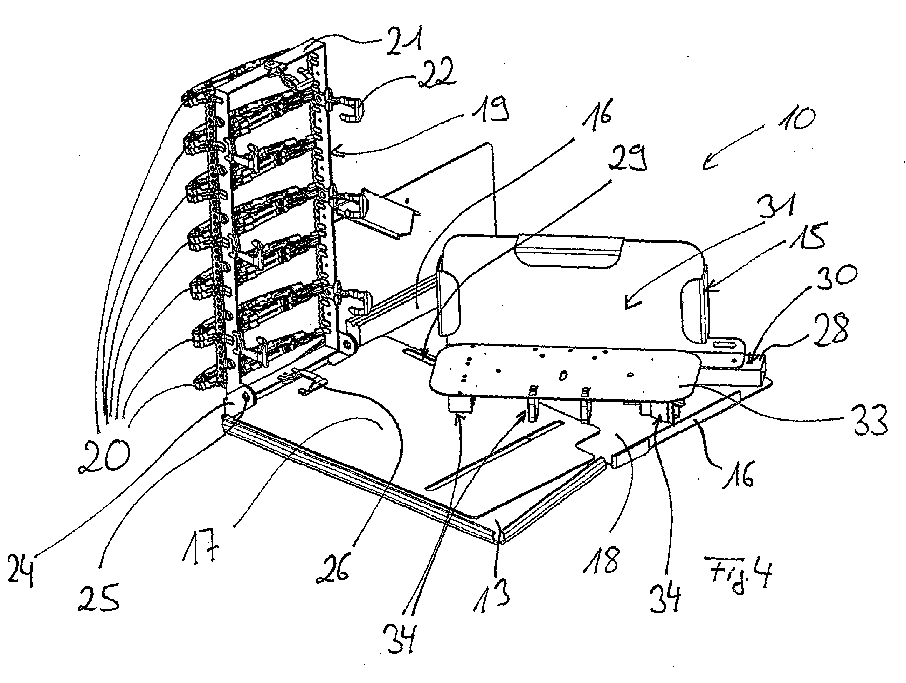

Im Gehäuse 11 sind Führungsschienen 16 montiert (siehe insbesondere Fig. 3, 4). In den Führungsschienen 16 ist eine Trageinrichtung 17, die als Schublade ausgebildet ist, hin- und herverschiebbar geführt bzw. gelagert. Die als Schublade ausgebildete Trageeinrichtung 17 ist hierdurch in einer ersten Ebene in einer durch die Führungsschienen 16 vorgegebenen Richtung verschiebbar, nämlich parallel zu einer Bodenwand 18 des Gehäuses 11.

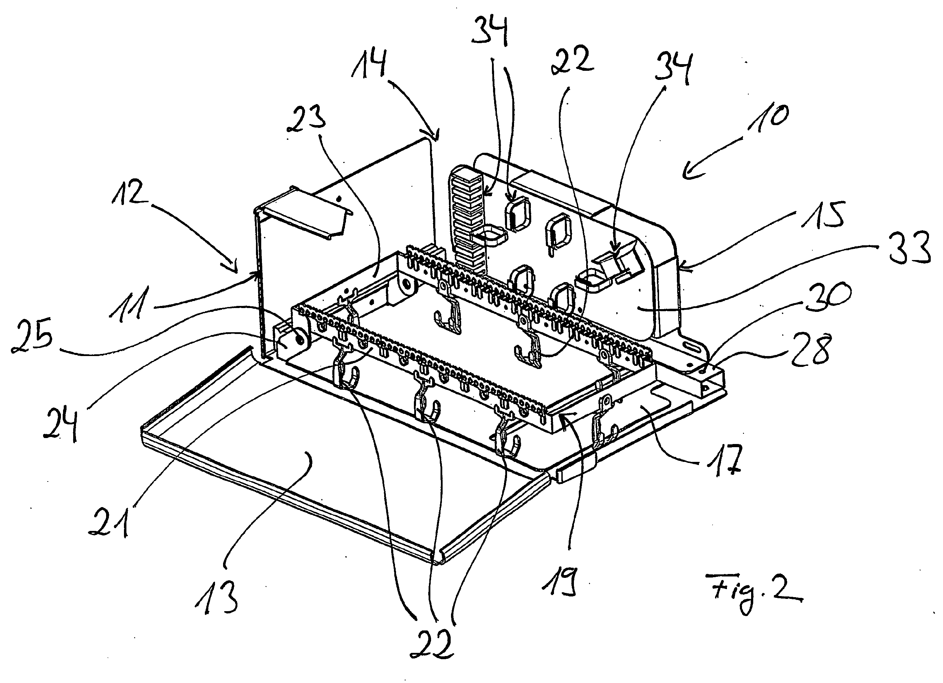

In der Trageinrichtung 17 des Spleißkassettenmanagementsystems 10 ist ein Spleißkassettenhalter 19 positioniert. Der Spleißkassettenhalter 19 nimmt mehrere in etwa parallel zueinander verlaufende Spleißkassetten 20 auf. In Fig. 2 ist der Spleißkassettenhalter 19 ohne Spleißkassetten 20 gezeigt, um den Blick auf den im Bereich der Rückseite 14 des Gehäuses 11 angeordneten Überlängenspeicher 15 freizugeben. Gemäß Fig. 2 ist der Spleißkassettenhalter 19 von einem Rahmen 21 gebildet, wobei sich der Rahmen 21 mit hakenartigen Vorsprüngen 22 auf der als Schublade ausgebildeten Trageinrichtung 17 des Spleißkassettenmanagementsystems 10 abstützt.

Der Spleißkassettenhalter 19 ist zusätzlich auch von der ersten Ebene in eine zweite Ebene klappbar, wobei die zweite Ebene in etwa senkrecht zur ersten Ebene verläuft. Hierzu ist einem Seitenelement 23 des Spleißkassettenhalters 19 eine Schwenkeinrichtung 24 zugeordnet. Über die Schwenkeinrichtung 24 ist der Spleißkassettenhalter 19 an der Trageinrichtung 17 befestigt. Zum Herausklappen des Spleißkassettenhalters 19 aus der ersten Ebene in die zweite Ebene wird der Spleißkassettenhalter 19 um eine Drehachse 25 der Schwenkeinrichtung 24, die sich in etwa parallel zum Seitenelement 23 der Trageinrichtung 17 erstreckt, um 90° verschwenkt. Ein Anschlag 26 begrenzt hierbei die Verschwenkbewegung des Spleißkassettenhalters 19.

Erfindungsgemäß ist der Überlängenspeicher 15 mit einem ersten Ende 27 auf der ausziehbaren Trageinrichtung 17 und mit einem dem ersten Ende 27 gegenüberliegenden zweiten Ende 28 auf einer Bodenwand 18 des Gehäuses 11 montiert. Beim Ausziehen der Trageinrichtung 17 wird der Überlängenspeicher 15 verschwenkt. Fig. 1 und 2 zeigen den Überlängenspeicher 15 in einer Position, in welcher sich derselbe bei in das Gehäuse 11 eingeschobener Trageinrichtung 17 in etwa parallel zu dieser erstreckt. Fig. 3 und 4 zeigen einen verschwenkten Überlängenspeicher 15 bei aus dem Gehäuse 11 herausgezogener Trageinrichtung 17.

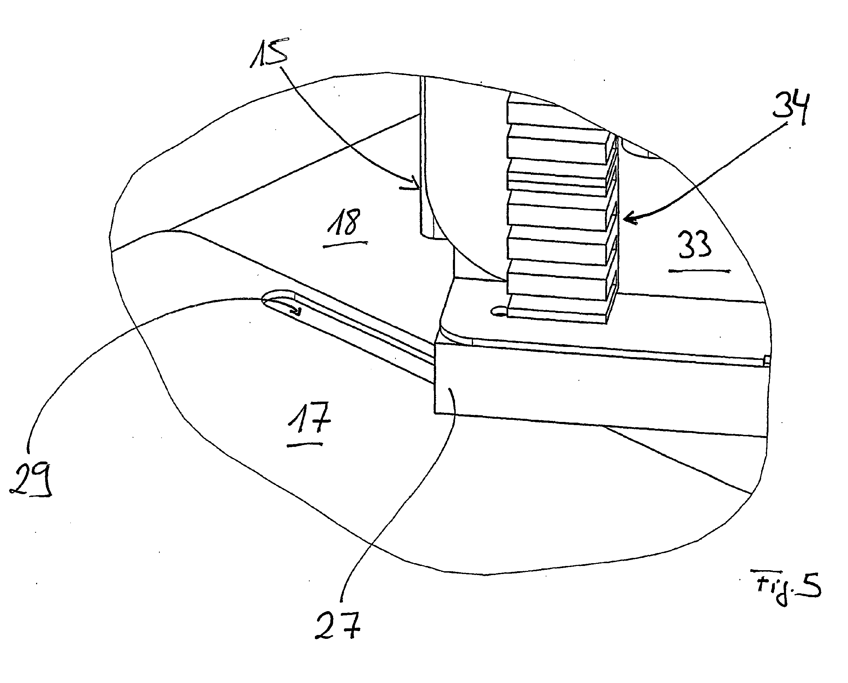

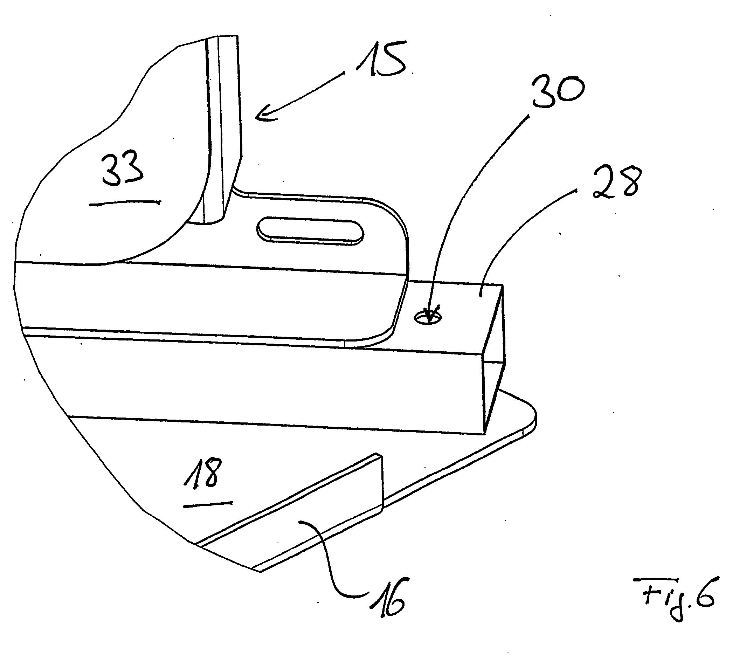

Wie insbesondere Fig. 5 entnommen werden kann, ist der Überlängenspeicher 15 derart mit dem ersten Ende 27 auf der ausziehbaren Trageinrichtung 17 montiert, dass beim Ausziehen der Trageinrichtung 17 das erste Ende 27 in einem der Trageinrichtung 17 zugeordneten Langloch 29 hin- und herbewegbar ist. Mit dem zweiten Ende 28 ist der Überlängenspeicher 15 derart auf der Bodenwand 18 des Gehäuses 11 montiert ist, dass beim Ausziehen der Trageinrichtung 17 das zweite Ende 28 in einem der Bodenwand 18 zugeordneten Gelenk 30 drehbar ist. Dies kann insbesondere Fig. 6 entnommen werden.

Durch diese erfindungsgemäße Ausgestaltung wird demzufolge beim Herausziehen der Trageinrichtung 17 aus dem Gehäuse 11 der Überlängenspeicher 15 automatisch mit verschwenkt, nämlich um das dem Ende 28 zugeordnete Gelenk 30. Hierdurch wird die sich beim Herausziehen der Trageinrichtung 17 bzw. des Spleißkassettenhalters 19 einstellende Längendifferenz zwischen den Spleißkassetten 20 und einem nicht dargestellten Befestigungspunkt für die Lichtwellenleiter bzw. Lichtwellenleiterkabel, welcher in der Nähe des Endes 28 positioniert ist, automatisch ausgeglichen. Die Lichtwellenleiter bzw. Lichtwellenleiterkabel als solche werden so gut wie nicht bewegt, gestaucht und genickt. Mechanische Beanspruchungen der Lichtwellenleiter bzw. Lichtwellenleiterkabel werden dadurch vermieden.

Der Überlängenspeicher 15 des Spleißkassettenmanagementsystems 10 im Sinne der Erfindung weist zwei voneinander getrennte Aufnahmeräume 31, 32 für Überlängen auf, wobei ein erster Aufnahmeraum 31 dem Ablegen von Überlängen der ankommenden Bündeladern und ein zweiter Aufnahmeraum 32 dem Ablegen von Überlängen der abgehenden Lichtwellenleiter, sogenannter Pigtails, dient. Die beiden Aufnahmeräume 31, 32 sind durch eine verschwenkbare Wand 33 voneinander getrennt (siehe insbesondere Fig. 3, 4). Auf der verschwenkbaren Wand 33 sind den zweiten Aufnahmeraum 32 begrenzende Führungen 34 für die abgehenden Lichtwellenleiter angeordnet sind. Hierdurch ist eine besonders strukturierte Ablage der Lichtwellenleiter im Spleißkassettenmanagementsystem 10 möglich.

Mithilfe des erfindungsgemäßen Spleißkassettenmanagementsystems 10 lassen sich die Spleißkassetten 20 bzw. der Spleißkassettenhalter 19 besonders platzsparend im Verteilerschrank positionieren. Hierdurch können hohe Packungsdichten im Lichtwellenleiter-Verteilerschrank realisiert werden. Zum Zugriff auf die in den Spleißkassetten 20 abgelegten Lichtwellenleiter muss der Spleißkassettenhalter 19 lediglich zusammen mit der Trageinrichtung 17 zu einer Seite des Spleißkassettenmanagementsystems 10 aus dem Gehäuse 11 heraus bewegt und anschließend in die zweite Ebene verschwenkt werden. Beim Herausziehen des Spleißkassettenhalters 19 zusammen mit der Trageinrichtung 17 wird der Überlängenspeicher 15 mit verschwenkt. Technisch bedingte Kabelüberlängen können sicher aufgenommen und abgelegt werden, ohne dass die ankommenden und abgehenden Lichtwellenleiter mechanischen Beanspruchungen ausgesetzt werden. Es wird eine schonende Handhabung der Lichtwellenleiter und ein sogenanntes Einzelfasermanagement in einem lediglich 300 Millimeter tiefen Lichtwellenleiter-Verteilerschrank ermöglicht. Der Zugriff auf die Lichtwellenleiter erfolgt ausschließlich von der Vorderseite.

### Bezugszeichenliste

- 10: Spleißkassettenmanagementsystem
- 11: Gehäuse
- 12: Vorderseite
- 13: Abdeckklappe
- 14: Rückseite
- 15: Überlängenspeicher
- 16: Führungsschiene
- 17: Trageinrichtung
- 18: Bodenwand
- 19: Spleißkassettenhalter
- 20: Spleißkassette
- 21: Rahmen
- 22: Vorsprung
- 23: Seitenelement
- 24: Schwenkeinrichtung
- 25: Drehachse
- 26: Anschlag
- 27: Ende
- 28: Ende
- 29: Langloch
- 30: Gelenk
- 31: Aufnahmeraum
- 32: Aufnahmeraum
- 33: Wand
- 34: Führung

## Patentansprüche

1. Spleißkassettenmanagementsystem für einen Lichtwellenleiter-Verteilerschrank, mit einem Gehäuse (11), mit einem im Gehäuse (11) angeordneten Spleißkassettenhalter (19) und mit mehreren in dem Spleißkassettenhalter (19) angeordneten Spleißkassetten (20), wobei der Spleißkassettenhalter (19) auf einer ausziehbaren Trageinrichtung (17) montiert ist, wobei ein Überlängenspeicher (15) mit einem ersten Ende (27) auf der ausziehbaren Trageinrichtung (17) und mit einem zweiten Ende (28) auf einer Bodenwand (18) des Gehäuses (11) montiert ist, **dadurch gekennzeichnet, dass** beim Ausziehen der Trageinrichtung (17) der Überlängenspeicher (15) verschwenkt wird.

2. Spleißkassettenmanagementsystem nach Anspruch 1, **dadurch gekennzeichnet, dass** die Trageeinrichtung (17) in etwa parallel und oberhalb zur der Bodenwand (18) des Gehäuses (11) verläuft, wobei die ausziehbare Trageinrichtung (17) gegenüber der Bodenwand (18) des Gehäuses (11) verschiebbar ist.

3. Spleißkassettenmanagementsystem nach Anspruch 1 oder 2, **dadurch gekennzeichnet, dass** der Überlängenspeicher (15) derart mit dem ersten Ende (27) auf der ausziehbaren Trageinrichtung (17) montiert ist, dass beim Ausziehen der Trageinrichtung (17) das erste Ende (27) in einem der Trageinrichtung (17) zugeordneten Langloch (29) hin- und herbewegbar ist.

4. Spleißkassettenmanagementsystem nach einem der Ansprüche 1 bis 3, **dadurch gekennzeichnet, dass** der Überlängenspeicher (15) mit dem zweiten Ende (28) derart auf der Bodenwand (18) des Gehäuses (11) montiert ist, dass beim Ausziehen der Trageinrichtung (17) das zweite Ende (28) in einem der Bodenwand (18) zugeordneten Gelenk (30) drehbar ist.

5. Spleißkassettenmanagementsystem nach einem der Ansprüche 1 bis 4, **dadurch gekennzeichnet, dass** der Überlängenspeicher (15) zwei durch eine verschwenkbare Wand (33) voneinander getrennte Aufnahmeräume (31, 32) für Überlängen ausweist, wobei ein erster Aufnahmeraum (31) dem Ablegen von Überlangen der ankommenden Bündeladern und ein zweiter Aufnahmeraum (32) dem Ablegen von Überlängen der abgehenden Lichtwellenleiter dient.

6. Spleißkassettenmanagementsystem nach Anspruch 5, **dadurch gekennzeichnet, dass** auf der verschwenkbaren Wand (33) den zweiten Aufnahmeraum (32) begrenzende Führungen (34) für die abgehenden Lichtwellenleiter angeordnet sind.

## Claims

1. Splicing cassette management system for an optical waveguide distribution cabinet, having a housing (11), having a splicing cassette holder (19) which is arranged in the housing (11), and having a plurality of splicing cassettes (20) which are arranged in the splicing cassette holder (19), wherein the splicing cassette holder (19) is mounted on a withdrawable supporting device (17), wherein a first end (27) of an excess-length store (15) is mounted on the withdrawable supporting device (17), and a second end (28) is mounted on a base wall (18) of the housing (11), **characterized in that** the excess-length store (15) is pivoted when the supporting device (17) is withdrawn.

2. Splicing cassette management system according to Claim 1, **characterized in that** the supporting device (17) runs approximately parallel to and above the base wall (18) of the housing (11), wherein the withdrawable supporting device (17) can be moved with respect to the base wall (18) of the housing (11).

3. Splicing cassette management system according to Claim 1 or 2, **characterized in that** the excess-length store (15) is mounted with the first end (27) on the withdrawable supporting device (17) such that, when the supporting device (17) is withdrawn, the first end (27) can be moved backwards and forwards in an elongated hole (29) which is associated with the supporting device (17).

4. Splicing cassette management system according to one of Claims 1 to 3, **characterized in that** the second end (28) of the excess-length store (15) is mounted on the base wall (18) of the housing (11) such that, when the supporting device (17) is withdrawn, the second end (28) can be rotated in a joint (30) which is associated with the base wall (18).

5. Splicing cassette management system according to one of Claims 1 to 4, **characterized in that** the excess-length store (15) has two accommodation areas (31, 32), which are separated from one another by a wall (33) which can pivot, for excess lengths, wherein a first accommodation area (31) is used to store excess lengths of the incoming multifibre units, and a second accommodation area (32) is used to store excess lengths of the outgoing optical waveguides.

6. Splicing cassette management system according to Claim 5, **characterized in that** guides (34), which bound the second accommodation area (32), for the outgoing optical waveguides are arranged on the wall (33) which can pivot.

## Revendications

1. Système de gestion de cassette d'épissurage pour une armoire de distribution pour guide d'ondes optiques, comprenant un boîtier (11), un support de cassette d'épissurage (19) disposé dans le boîtier (11) et plusieurs cassettes d'épissurage (20) disposées dans le support de cassette d'épissurage (19), le support de cassette d'épissurage (19) étant monté sur un dispositif porteur (17) pouvant être sorti, un dispositif de stockage de surlongueurs (15) étant monté avec une première extrémité (27) sur le dispositif porteur pouvant être sorti (17) et avec une deuxième extrémité (28) sur une paroi de fond (18) du boîtier (11), **caractérisé en ce que** lors de la sortie du dispositif porteur (17), le dispositif de stockage de surlongueurs (15) est pivoté.

2. Système de gestion de cassette d'épissurage selon la revendication 1, **caractérisé en ce que** le dispositif porteur (17) s'étend approximativement parallèlement à et au-dessus de la paroi de fond (18) du boîtier (11), le dispositif porteur pouvant être sorti (17) pouvant être déplacé par rapport à la paroi de fond (18) du boîtier (11).

3. Système de gestion de cassette d'épissurage selon la revendication 1 ou 2, **caractérisé en ce que** le dispositif de stockage de surlongueurs (15) est monté avec la première extrémité (27) sur le dispositif porteur pouvant être sorti (17) de telle sorte que lors de la sortie du dispositif porteur (17), la première extrémité (27) puisse être déplacée d'avant en arrière dans un trou oblong (29) associé au dispositif porteur (17).

4. Système de gestion de cassette d'épissurage selon l'une quelconque des revendications 1 à 3, **caractérisé en ce que** le dispositif de stockage de surlongueurs (15) est monté avec la deuxième extrémité (28) sur la paroi de fond (18) du boîtier (11) de telle sorte que lors de la sortie du dispositif porteur (17), la deuxième extrémité (28) puisse tourner dans une articulation (30) associée à la paroi de fond (18).

5. Système de gestion de cassette d'épissurage selon l'une quelconque des revendications 1 à 4, **caractérisé en ce que** le dispositif de stockage de surlongueurs (15) présente deux espaces de réception (31, 32) pour les surlongueurs séparés par une paroi pivotante (33), un premier espace de réception (31) servant à déposer les surlongueurs des filaments en faisceaux arrivant, et un deuxième espace de réception (32) servant à déposer des surlongueurs des guides d'ondes optiques sortants.

6. Système de gestion de cassette d'épissurage selon la revendication 5, **caractérisé en ce que** des guides (34) pour les guides d'ondes optiques sortants limitant le deuxième espace de réception (32) sont disposés sur la paroi pivotante (33).
